# EUROPÄISCHE PATENTSCHRIFT

(11) **EP 3 571 323 B1**
(45) Veröffentlichungstag und Bekanntmachung des Hinweises auf die Patenterteilung: **20.08.2025**
(21) Anmeldenummer: 17702538.4
(22) Anmeldetag: 18.01.2017
(51) Int. Cl.: C21D 9/34, B21D 53/26, B60B 3/04, C21D 1/25, B21D 35/00

(54) **VERFAHREN ZUR HERSTELLUNG EINES FAHRZEUGRADES IN BLECHBAUWEISE**
METHOD FOR PRODUCING A VEHICLE WHEEL CONSISTING OF SHEET METAL
PROCÉDÉ DE FABRICATION D'UNE ROUE DE VÉHICULE EN TÔLE

(43) Veröffentlichungstag der Anmeldung: 27.11.2019
(73) Patentinhaber: ThyssenKrupp Steel Europe AG, 47166 Duisburg (DE)
(72) Erfinder: PIERONEK, David, 44329 Dortmund (DE); BANIK, Janko, 58762 Altena (DE)
(74) Vertreter: ThyssenKrupp Steel Europe AG
(86) Internationale Anmeldenummer: PCT/EP2017/050957
(87) Internationale Veröffentlichungsnummer: WO 2018/133928

(56) Entgegenhaltungen:
- DE-A1- 10 323 833
- DE-A1- 102008 048 389
- JP-A- 2001 246 901
- JP-A- H0 538 901
- US-A1- 2004 041 458
- US-A1- 2007 006 461

## Beschreibung

Die Erfindung betrifft ein Verfahren zur Herstellung eines Fahrzeugrades mit einer Felge zur Aufnahme eines Reifens und eine an die Felge stoff-, kraft- und/oder formschlüssig angebundene Radschüssel mit einem Anbindungsbereich zur lösbaren Anbindung an einen Radträger, umfassend folgende Schritte:
a) Kaltformen oder Kaltvorformen einer Felge,
b) Kaltformen oder Kaltvorformen einer Radschüssel, und
c) Verbinden der Radschüssel mit der Felge zur Bildung eines Fahrzeugrades,
wobei für die Felge oder Felge und Radschüssel ein härtbarer Stahlwerkstoff mit einem Kohlenstoffgehalt von mindestens 0,15 Gew.-%, insbesondere von mindestens 0,22 Gew.-%, vorzugsweise von mindestens 0,27 Gew.-% bereitgestellt wird.

### Technischer Hintergrund

Konventionell hergestellte Fahrzeugräder, beispielsweise Kraftfahrzeugräder, insbesondere in Stahlblechbauweise bestehen aus einer Felge zur Aufnahme eines Reifens und einer an die Felge stoff-, kraft- und/oder formschlüssig angebundene Radschüssel mit einem Anbindungsbereich zur lösbaren Anbindung an einen Radträger. Die Radschüssel wie auch die Felge werden konventionell aus einem mikrolegierten Feinkornbaustahl oder Dualphasen-Stahl, beispielsweise einem DP600 kalt geformt.

Eine Gewichtsreduzierung zu den konventionell hergestellten Fahrzeugrädern kann erreicht werden, wenn zum einen Material mit höherer Festigkeit bzw. Schwingfestigkeit zur sicheren Aufnahme der Betriebslasten verwendet wird, und zum anderen Geometrieanpassungen zur Kompensierung der Steifigkeitsverluste aufgrund geringeren Materialdicken umgesetzt werden. Mit ansteigender Festigkeit der Materialien nimmt aber in der Regel auch die Umformbarkeit des Materials ab. Somit stößt der Leichtbau mit kaltumformbaren Stählen an technische Grenzen. Abhilfe kann in diesen Fällen die sogenannte "Warmumformung" schaffen, wodurch die Anforderung nach hohen Umformgraden bei gleichzeitig hohen Festigkeiten der endgeformten Bauteile erfüllt werden kann.

Leichtbaupotential bieten heutzutage Warmumformstähle, wie beispielsweise Mangan-Bor-Stähle, welche mechanische Lasten wie dynamische Wechselbeanspruchungen aufnehmen können. Als Stand der Technik insbesondere zur Herstellung von Radschüsseln aus einem Warmumformstahl, welche zumindest bereichsweise pressgehärtet sein können, wird auf die Druckschriften DE 10 2007 019 485 A1, DE 10 2013 114 245 B3 und DE 10 2014 108 901 B3 verwiesen. In der Druckschrift DE 10 2007 019 485 A1 wird die Anbindung der gehärteten Einzelkomponenten (Felge/Radschüssel) unter anderem durch ein Verschweißen oder Löten vorgeschlagen. Das im Fahrzeugradbau etablierte MAG-Schweißen resultiert in einem Aufschmelzen des Grundwerkstoffs und bewirkt bei Warmumformstählen zusätzliche Anlasseffekte in der Wärmeeinflusszone unter Ausbildung einer Erweichungszone ("Härtesack"). Diese Erweichungszone im Umgebungsbereich der Schweißzone zeichnet sich durch eine geringe Festigkeit und Duktilität aus und bildet eine "metallurgische Kerbe", welche sich nachteilig auf die Betriebsfestigkeit der Verbindung respektive des gesamten Bauteils auswirken und zu einem vorzeitigen Versagen führen kann, so dass die Werkstofffestigkeit nicht global auf das gesamte Fahrzeugrad übertragen werden kann.

Des Weiteren wird als weiterer Stand der Technik zur Herstellung von Fahrzeugrädern auf die Dokumente US 2004/0041458 A1, JP 05-038901, DE 103 23 833 A1 und JP 2001-246901 verwiesen.

Die US 2007/006461 A1 beschreibt die Herstellung von automobilen Strukturteilen aus einem lufthärtenden martensitischen Edelstahl.

In Bezug auf den Stand der Technik besteht weiteres Verbesserungspotential von Fahrzeugrädern insbesondere hinsichtlich der Nutzung konventioneller Fertigungsstraßen mit gleichzeitig hoher Betriebsfestigkeit und Sicherheit der hergestellten Fahrzeugräder, insbesondere bei möglichst geringem Gewicht sowie geringen Fertigungskosten.

### Zusammenfassung der Erfindung

Der Erfindung liegt somit die Aufgabe zu Grunde, ein Verfahren zur Herstellung von Fahrzeugrädern bereitzustellen, welches möglichst einfach in vorhandenen Fertigungsstraßen umgesetzt werden kann und eine hohe Betriebsfestigkeit und Sicherheit der hergestellten (Leichtbau-) Fahrzeugräder gewährleisten kann, sowie eine entsprechende Verwendung der hergestellten (Leichtbau-) Fahrzeugräder anzugeben.

Gelöst wird diese Aufgabe durch ein Verfahren mit den Merkmalen des Patentanspruchs 1.

Die Erfinder haben festgestellt, dass durch die Bereitstellung von härtbaren Stahlwerkstoffen konventionelle Fertigungsstraßen weiterhin genutzt können und damit verbunden kostengünstig Einzelkomponenten für die Fahrzeugradherstellung hergestellt werden können, da die härtbaren Stahlwerkstoffe in ihrem Anlieferungszustand respektive kalten Verarbeitungszustand moderate Festigkeiten aufweisen, die mit den bisher konventionell eingesetzten Stahlwerkstoffen vergleichbar sind und dadurch geeignete Umformeigenschaften besitzen, die insbesondere zum kalten (Vor-) Formen der Radschüssel und/oder der Felge geeignet sind. Das Potential der härtbaren Stahlwerkstoffe ist nach der (kalten) Formgebung noch nicht ausgeschöpft. Der bereitgestellte Stahlwerkstoff ist ein Vergütungsstahl, insbesondere der Güte C22, C35, C45, C55, C60, 42CrMo4, ein manganhaltiger Stahl, insbesondere der Güte 16MnB5, 16MnCr5, 20 MnB5, 22MnB5, 30MnB5, 37MnB4, 37MnB5, 40MnB4, oder ein Einsatzstahl.

Die Radschüssel und die Felge werden in Schritt a) und b) mittels Druckumformen, Zugumformen, Zugdruckumformen, Biegeumformen, Schubumformen, Drückwalzen, Tiefziehen oder mittels einer Kombination der genannten Herstellungsverfahren geformt oder vorgeformt.

Die Radschüssel wird in Schritt c) stoff-, kraft- und/oder formschlüssig an die Felge angebunden. Vorzugsweise wird die Radschüssel zumindest teilweise über eine Fügenaht, welche als MIG-, MAG-, Laser-, Schweiß- oder Lötnaht ausgeführt sein kann, an die Felge angebunden. Alternativ kann die Radschüssel auch mittels Kleben und/oder Widerstandsschweißen an die Felge angebunden werden. Alternativ oder kumulativ ist auch eine kraftschlüssige Anbindung durch einen (zusätzlichen) Presssitz zwischen Radschüssel und Felge denkbar, insbesondere zur Entlastung zusätzlicher Verbindungsmittel. Der Einsatz von formschlüssigen, mechanischen Fügeverfahren, wie zum Beispiel Clinchen, Nieten oder mit Funktionselementen ist ebenfalls möglich. Die Anbindung zwischen Radschüssel und Felge muss nicht zwangsläufig konventionell im sogenannten "Tiefbett" erfolgen. Radkonstruktionen, wie zum Beispiel sogenannte Semi- oder Full-Face-Scheibenräder oder mit mehrteiliger Ausführung sind ebenfalls denkbar.

Gemäß der Erfindung wird vor dem Schritt c) die kaltgeformte oder kaltvorgeformte Felge oder die kaltgeformte oder kaltvorgeformte Felge und die kaltgeformte oder kaltvorgeformte Radschüssel in einem Schritt j) zunächst vollständig auf eine Temperatur oberhalb der A_{c1}-Temperatur, vorzugsweise oberhalb der A_{c3}-Temperatur erwärmt. Nach dem Erwärmen respektive Durchwärmen wird anschließend die warme Felge oder die warme Felge und warme Radschüssel in einem Schritt k) partiell gehärtet oder in einem Schritt I) vollständig gehärtet. Im gehärteten Bereich liegt eine im Wesentlichen martensitische Gefügestruktur vor. Auch ein zusätzliches Formen während des Härtens ist möglich.

Dabei entspricht die A_{c1}-Temperatur der Temperatur in Abhängigkeit von der Zusammensetzung des Stahlwerkstoffes, bei welcher sich das Gefüge in Austenit umwandelt respektive die A_{c3}-Temperatur der Temperatur, bei der die Umwandlung vollständig in Austenit abgeschlossen ist. Zum partiellen oder vollständigen Härten wird eine Abkühlrate benötigt, welche ausreichend hoch ist, um das Gefüge, welches zunächst im Wesentlichen im austenitischen Zustand vorliegt, in ein im Wesentlichen martensitisches Gefüge umzuwandeln, so dass sich partiell oder vollständig gehärtete Bereiche ausbilden können. Je nach Zusammensetzung des härtbaren Stahlwerkstoffes sind entsprechende Kenngrößen aus sogenannten ZTU-Diagrammen entnehmbar.

Die Erfinder haben durch umfangreiche Betriebsfestigkeitsuntersuchungen festgestellt, dass der Festigkeitsbereich von 800 - 1200 MPa und/oder der Härtebereich von 250 - 370 HV10 für Fahrzeugräder besonders geeignet sind, da in diesem Bereich ein guter Kompromiss zwischen zyklischer Biegewechselfestigkeit und Kerbempfindlichkeit eingestellt werden kann, der sich äußerst positiv auf die Bauteilperformance auswirkt.

Gemäß einer ersten Ausgestaltung der Erfindung wird die vollständig gehärtete Felge oder die vollständig gehärtete Felge und die vollständig gehärtete Radschüssel nach Schritt I) in einem Schritt m) partiell angelassen oder in einem Schritt n) vollständig angelassen. Je nach Ausführung des herzustellenden Fahrzeugrades kann die Gefügestruktur der vollständig gehärteten Felge oder der vollständig gehärteten Felge und Radschüssel partiell oder vollständig wärmebehandelt werden, wobei vorzugsweise eine Zugfestigkeit im angelassenen Bereich zwischen 800 und 1200 MPa und/oder eine Härte zwischen 250 und 370 HV10, vorzugsweise zwischen 850 und 1100 MPa und/oder eine Härte zwischen 265 und 340 HV10, besonders bevorzugt zwischen 900 und 1050 MPa und/oder eine Härte zwischen 280 und 330 HV10 angestrebt wird.

Gemäß einer zweiten Ausgestaltung der Erfindung wird die partiell gehärtete Felge oder die partiell gehärtete Felge und die partiell gehärtete Radschüssel nach Schritt k) in einem Schritt o) angelassen, wobei durch die Wärmebehandlung eine Gefügestruktur im partiell gehärteten Bereich mit vorzugsweise einer Zugfestigkeit zwischen 800 und 1200 MPa und/oder eine Härte zwischen 250 und 370 HV10, vorzugsweise zwischen 850 und 1100 MPa und/oder eine Härte zwischen 265 und 340 HV10, besonders bevorzugt zwischen 900 und 1050 MPa und/oder eine Härte zwischen 280 und 330 HV10 angestrebt wird.

Nach dem Anlassen nach Schritt m), n) oder o) wird die Radschüssel mit der Felge zur Bildung eines Fahrzeugrades verbunden, Schritt c) wird durchgeführt.

Gemäß einer zweiten alternativen Ausführung wird nach dem Härten nach Schritt k) (partiell gehärtete Felge oder partiell gehärtete Felge und partiell gehärtete Radschüssel) oder nach Schritt I) (vollständig gehärtete Felge oder vollständig gehärtete Felge und die vollständig gehärtete Radschüssel) die Radschüssel mit der Felge zur Bildung eines Fahrzeugrades verbunden, Schritt c) wird durchgeführt. Das Fahrzeugrad wird in einem Schritt p) partiell angelassen oder in einem Schritt q) vollständig angelassen, wobei je nach Ausführung des Fahrzeugrades vorzugsweise eine Zugfestigkeit im angelassenen Bereich zwischen 800 und 1200 MPa und/oder eine Härte zwischen 250 und 370 HV10, vorzugsweise zwischen 850 und 1100 MPa und/oder eine Härte zwischen 265 und 340 HV10, besonders bevorzugt zwischen 900 und 1050 MPa und/oder eine Härte zwischen 280 und 330 HV10 angestrebt wird, um eine optimale Betriebsfestigkeit und Sicherheit des gesamten Fahrzeugrades gewährleisten zu können. Zudem können Schwachstellen, wie beispielsweise die Wärmeeinflusszone bei stoffschlüssigen Fügeverbindungen mit Wärmeeintrag (Schweißen, Löten) oder kritische Belastungsbereiche mit hoher Kerbwirkung, wie beispielsweise der Anbindungsbereich an einen Radträger, insbesondere der Bereich der Radverschraubung und der Bereich, indem Belüftungsöffnungen/-löcher vorgesehen sind, vermindert werden.

Gemäß einer Ausgestaltung wird das Anlassen bei einer Temperatur von mindestens 200°C, insbesondere von mindestens 300°C, vorzugsweise von mindestens 400°C und unterhalb der A_{c1}-Temperatur, vorzugsweise unter 650°C durchgeführt. Die Dauer des Anlassens ist abhängig von der Zusammensetzung und der Materialdicke des entsprechenden Stahlwerkstoffes sowie von der einzustellenden Festigkeit des gehärteten Bereichs. Durch das Anlassen kann im überwiegend martensitischen Gefüge, welches spröde sein kann, eine hohe Zähigkeit bei ausreichender Festigkeit und Duktilität eingestellt werden, wodurch sich ein für die zyklische Belastung von Fahrzeugrädern optimaler Gefügezustand ergibt. Des Weiteren kann durch das Anlassen und damit einhergehenden Entspannung des Gefüges die Gefahr von wasserstoffinduzierter Rissbildung gesenkt werden. Die wärmebehandelte Gefügestruktur entspricht einem im Wesentlichen angelassenen Martensit.

Zur Sicherstellung einer hohen Maßhaltigkeit bei gleichzeitig hoher Betriebsfestigkeit und Sicherheit wird gemäß einer weiteren Ausgestaltung zwischen dem Beginn des Anlassvorgangs und dem Wiedererreichen der Raumtemperatur ein Kalibrieren durchgeführt. Das Kalibrieren kann auch nach dem Anlassvorgang erfolgen. Über geeignete Mittel wird während dieses Fertigungsschrittes zur Einhaltung der entsprechenden Formtreue die Bauteilgeometrie des Fahrzeugrades und/oder der Felge und/oder der Radschüssel kalibriert. Das Kalibrieren kann eine geringfügige Formgebung umfassen, um ggf. Korrekturen zur Einstellung der Sollgeometrie zu bewirken.

Gemäß einer weiteren Ausgestaltung wird das Härten nur in der Randschicht des härtbaren Stahlwerkstoffs durchgeführt. Ein Durchhärten, insbesondere über die gesamte Materialdicke, ist beispielsweise bei Blechdicken > 10 mm, die für die Herstellung von Nutzfahrzeugräder verwendet werden, vorzugsweise für die Radschüssel von LKW-Räder sehr energieaufwendig. Da bei überwiegend biegewechselbeanspruchten Bauteilen eine hohe Härte insbesondere im oberflächennahen Bereich zum Tragen kommt, ist eine Randschichthärtung aus fertigungstechnischer Sicht ökonomischer. Vorzugsweise wird bei größeren Blechdicken, beispielsweise > 6 mm, insbesondere > 8 mm, besonders bevorzugt > 10 mm im Wesentlichen nur eine Randschichthärtung durchgeführt.

Durch eine Randschichthärtung bleibt das Kernmaterial unverändert (zäh) und bewirkt, dass zusätzliche Druckspannungen an der Oberfläche eingebracht werden, die sich positiv auf die Dauerfestigkeit des Fahrzeugrades auswirken können.

Erfindungsgemäß hergestellte Fahrzeugrades werden in Nutzfahrzeugen, Lastkraftwagen Sonderfahrzeugen, Bussen, Omnibussen, ob mit Verbrennungsmotor und/oder elektrischem Antrieb, Anhänger oder Trailer verwendet. Je nach Fahrzeugtyp ist das Fahrzeugrad mit seiner Radschüssel und Felge mit entsprechenden Materialdicken, welche entlang des jeweiligen Querschnitts auch variieren können, belastungs- und/oder gewichtsoptimiert ausgelegt. Die Radschüssel ist nicht nur auf eine einteilige Ausführung beschränkt, vielmehr kann sie als Tailored Product ausgeführt und/oder aus einer mehrteiligen Ausführung zusammengesetzt sein.

### Kurze Beschreibung der Zeichnungen

Im Folgenden wird die Erfindung anhand von Zeichnungen näher erläutert. Im Einzelnen zeigen:
- Fig. 1: ein Ablauf eines Verfahrens nach einer nicht erfindungsgemäßen Ausführungsform ,
- Fig. 2: ein Ablauf eines Verfahrens nach einer Ausführungsform der Erfindung und
- Fig. 3: die wesentlichen Komponenten eines Fahrzeugrades in perspektivischer Ansicht.

### Beschreibung der bevorzugten Ausführungsformen

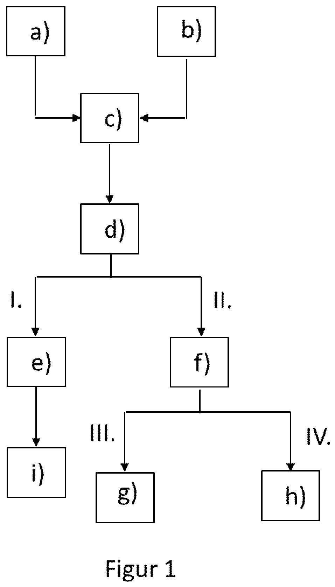

In Fig. 1 ist eine Abfolge von Verfahrensschritten nach einer nicht erfindungsgemäßen Ausführungsform dargestellt. Für die herzustellende Felge (1) und/oder die herzustellende Radschüssel (2) werden härtbare Stahlwerkstoffe mit einem Kohlenstoffgehalt von mindestens 0,15 Gew.-%, insbesondere von mindestens 0,22 Gew.-%, vorzugsweise von mindestens 0,27 Gew.-% bereitgestellt. Die Felge (1) und die Radschüssel (2) werden in Schritt a) und b) mittels Druckumformen, Zugumformen, Zugdruckumformen, Biegeumformen, Schubumformen, Drückwalzen, Tiefziehen oder mittels einer Kombination der genannten Herstellungsverfahren kalt geformt oder vorgeformt, insbesondere auch mehrstufig auf beispielsweise Transfer- oder Folgeverbundpressen. Die Radschüssel (2) wird in Schritt c) stoff-, kraft- und/oder formschlüssig an die Felge (1) zur Bildung eines Fahrzeugrades (3) angebunden. Vorzugsweise wird die Radschüssel (2) zumindest teilweise über eine Fügenaht, welche als MIG-, MAG-, Laser-, Schweiß- oder Lötnaht ausgeführt sein kann, an die Felge angebunden. Das Fahrzeugrad (3) wird nach seinem Zusammenbau in einem Schritt d) zunächst vollständig auf eine Temperatur oberhalb der A_{c1}-Temperatur, vorzugsweise oberhalb der A_{c3}-Temperatur erwärmt.

Gemäß einer nicht erfindungsgemäßen ersten Alternative kann das warme Fahrzeugrad (3) nach dem Erwärmen respektive Durchwärmen in einem Schritt e), dem Pfeil l folgend, partiell gehärtet werden. Das partiell gehärtete Fahrzeugrad (3) wird nach Schritt e) in einem Schritt i) angelassen, wobei durch die Wärmebehandlung eine Gefügestruktur im partiell gehärteten Bereich mit vorzugsweise einer Zugfestigkeit zwischen 800 und 1200 MPa und/oder eine Härte zwischen 250 und 370 HV10, vorzugsweise zwischen 850 und 1100 MPa und/oder eine Härte zwischen 265 und 340 HV10, besonders bevorzugt zwischen 900 und 1050 MPa und/oder eine Härte zwischen 280 und 330 HV10 angestrebt wird, wodurch eine optimale Betriebsfestigkeit und Sicherheit des gesamten Fahrzeugrades (3) gewährleistet werden kann.

Gemäß einer nicht erfindungsgemäßen zweiten Alternative kann das warme Fahrzeugrad (3) nach dem Erwärmen respektive Durchwärmen in einem Schritt f), dem Pfeil II folgend, vollständig gehärtet werden. Das vollständig gehärtete Fahrzeugrad (3) kann nach Schritt f) in einem Schritt g), dem Pfeil III folgend, partiell angelassen oder in einem Schritt h), dem Pfeil IV folgend, vollständig angelassen werden. Je nach Ausführung des Fahrzeugrades (3) kann die Gefügestruktur des vollständig gehärteten Fahrzeugrades partiell oder vollständig wärmebehandelt werden, wobei vorzugsweise eine Zugfestigkeit im angelassenen Bereich zwischen 800 und 1200 MPa und/oder eine Härte zwischen 250 und 370 HV10, vorzugsweise zwischen 850 und 1100 MPa und/oder eine Härte zwischen 265 und 340 HV10, besonders bevorzugt zwischen 900 und 1050 MPa und/oder eine Härte zwischen 280 und 340 HV10 angestrebt wird.

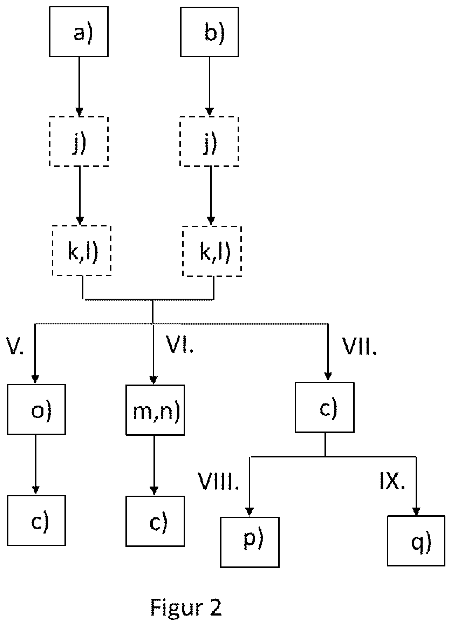

In Fig. 2 ist eine Abfolge von Verfahrensschritten nach einer Ausführungsform der Erfindung dargestellt. Für die herzustellende Felge (1) und/oder die herzustellende Radschüssel (2) werden härtbare Stahlwerkstoffe mit einem Kohlenstoffgehalt von mindestens 0,15 Gew.-%, insbesondere von mindestens 0,22 Gew.-%, vorzugsweise von mindestens 0,27 Gew.-% bereitgestellt. Die Felge (1) und die Radschüssel (2) werden in Schritt a) und b) mittels Druckumformen, Zugumformen, Zugdruckumformen, Biegeumformen, Schubumformen, Drückwalzen, Tiefziehen oder mittels einer Kombination der genannten Herstellungsverfahren kalt geformt oder vorgeformt, insbesondere auch mehrstufig auf beispielsweise Transfer- oder Folgeverbundpressen. Im Gegensatz zu der Ausführungsform in Fig. 1 wird die kaltgeformte oder kaltvorgeformte Felge (1) und/oder die kaltgeformte oder kaltvorgeformte Radschüssel (2) in einem Schritt j) zunächst vollständig auf eine Temperatur oberhalb der A_{c1}-Temperatur, vorzugsweise oberhalb der A_{c3}-Temperatur erwärmt. Der Schritt j) kann je nach Bedarf entweder nur an der kaltgeformten oder kaltvorgeformten Felge (1) oder an beiden Bauteilen (1, 2) durchgeführt werden, daher strichliniert dargestellt. Nach dem Erwärmen respektive Durchwärmen wird anschließend die warme Felge (1) oder die warme Felge (1) und die warme Radschüssel (2) in einem Schritt k) partiell gehärtet oder in einem Schritt l) vollständig gehärtet.

Dem Pfeil V folgend wird die partiell gehärtete Felge (1) oder die partiell gehärtete Felge (1) und die partiell gehärtete Radschüssel (2) nach Schritt k) in einem Schritt o) angelassen, wobei durch die Wärmebehandlung eine Gefügestruktur im partiell gehärteten Bereich mit vorzugsweise einer Zugfestigkeit zwischen 800 und 1200 MPa und/oder eine Härte zwischen 250 und 370 HV10, vorzugsweise zwischen 850 und 1100 MPa und/oder eine Härte zwischen 265 und 340 HV10, besonders bevorzugt zwischen 900 und 1050 MPa und/oder eine Härte zwischen 280 und 330 HV10 angestrebt wird. Anschließend werden die Felge (1) und die Radschüssel (2) zur Bildung eines Fahrzeugrades (3) miteinander verbunden, Schritt c) wird durchgeführt.

Dem Pfeil VI folgend wird die vollständig gehärtete Felge (1) oder die vollständig gehärtete Felge (1) und die vollständig gehärtete Radschüssel (2) nach Schritt l) in einem Schritt m) partiell angelassen oder in einem Schritt n) vollständig angelassen. Je nach Ausführung des herzustellenden Fahrzeugrades (3) kann die Gefügestruktur der vollständig gehärteten Felge (1) oder der vollständig gehärteten Felge (1) und Radschüssel (2) partiell oder vollständig wärmebehandelt werden, wobei vorzugsweise eine Zugfestigkeit im angelassenen Bereich zwischen 800 und 1200 MPa und/oder eine Härte zwischen 250 und 370 HV10, vorzugsweise zwischen 850 und 1100 MPa und/oder eine Härte zwischen 265 und 340 HV10, besonders bevorzugt zwischen 900 und 1050 MPa und/oder eine Härte zwischen 280 und 330 HV10 angestrebt wird. Anschließend werden die Felge (1) und die Radschüssel (2) zur Bildung eines Fahrzeugrades (3) miteinander verbunden, Schritt c).

Dem Pfeil VII folgend werden nach dem Härten nach Schritt k) (die partiell gehärtete Felge (1) oder die partiell gehärtete Felge (1) und die partiell gehärtete Radschüssel (2)) oder nach Schritt l) (die vollständig gehärtete Felge (1) oder die vollständig gehärtete Felge (1) und die vollständig gehärtete Radschüssel (2)) die Felge (1) und die Radschüssel (2) zur Bildung eines Fahrzeugrades (3) miteinander verbunden, Schritt c). Das Fahrzeugrad (3) wird in einem Schritt p), dem Pfeil VIII folgend, partiell angelassen oder in einem Schritt q), dem Pfeil IX folgend, vollständig angelassen, wobei je nach Ausführung des Fahrzeugrades vorzugsweise eine Zugfestigkeit im angelassenen Bereich zwischen 800 und 1200 MPa und/oder eine Härte zwischen 250 und 370 HV10, vorzugsweise zwischen 850 und 1100 MPa und/oder eine Härte zwischen 265 und 340 HV10, besonders bevorzugt zwischen 900 und 1050 MPa und/oder eine Härte zwischen 280 und 330 HV10 angestrebt wird, um eine optimale Betriebsfestigkeit und Sicherheit des gesamten Fahrzeugrades gewährleisten zu können.

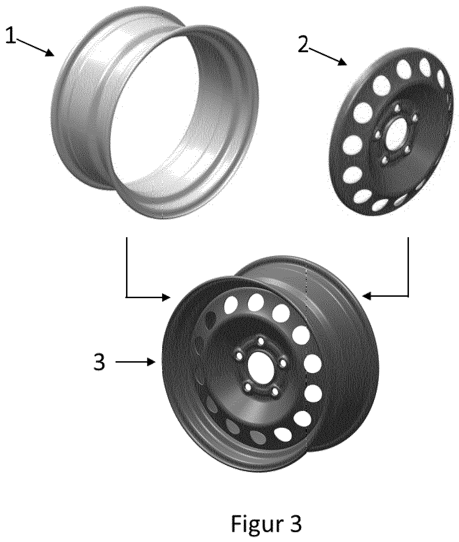

In Fig. 3 sind in perspektivischer Ansicht eine Felge (1), eine Radschüssel (2) und ein Fahrzeugrad (3), welches aus einer Felge (1) und einer an die Felge (1) stoff-, kraft- und/oder formschlüssige angebundene Radschüssel (2) zusammengesetzt bzw. gebildet ist, gezeigt.

## Patentansprüche

1. Verfahren zur Herstellung eines Fahrzeugrades (3) in Blechbauweise, mit einer Felge (1) zur Aufnahme eines Reifens und eine an die Felge stoff-, kraft- und/oder formschlüssig angebundene Radschüssel (2) mit einem Anbindungsbereich zur lösbaren Anbindung an einen Radträger, umfassend folgende Schritte:
a) Kaltformen oder Kaltvorformen einer Felge (1),
b) Kaltformen oder Kaltvorformen einer Radschüssel (2), und
c) Verbinden der Radschüssel (2) mit der Felge (1) zur Bildung eines Fahrzeugrades (3),
wobei für die Felge (1) oder die Felge (1) und Radschüssel (2) ein härtbarer Stahlwerkstoff mit einem Kohlenstoffgehalt von mindestens 0,15 Gew.-%, insbesondere von mindestens 0,22 Gew.-%, vorzugsweise von mindestens 0,27 Gew.-% bereitgestellt wird,
**dadurch gekennzeichnet, dass**
vor dem Schritt c) die kaltgeformte oder kaltvorgeformte Felge (1) oder die kaltgeformte oder kaltvorgeformte Felge (1) und die kaltgeformte oder kaltvorgeformte Radschüssel (2) in einem Schritt j) zunächst vollständig auf eine Temperatur oberhalb der A_{c1}-Temperatur, vorzugsweise oberhalb der A_{c3}-Temperatur erwärmt wird und anschließend die warme Felge (1) oder die warme Felge (1) und die warme Radschüssel (2) in einem Schritt k) partiell gehärtet wird oder in einem Schritt l) vollständig gehärtet wird und das Fahrzeugrad (3) in Nutzfahrzeugen, Lastkraftwagen, Sonderfahrzeugen, Bussen, Omnibussen, ob mit Verbrennungsmotor und/oder elektrischem Antrieb, Anhänger oder Trailer verwendet wird, wobei der bereitgestellte Stahlwerkstoff ein Einsatzstahl, ein manganhaltiger Stahl oder ein Vergütungsstahl ist.

2. Verfahren nach Anspruch 1,
**dadurch gekennzeichnet, dass**
nach Schritt I) die vollständig gehärtete Felge (1) oder die vollständig gehärtete Felge (1) und die vollständig gehärtete Radschüssel (2) in einem Schritt m) partiell angelassen wird oder in einem Schritt n) vollständig angelassen wird.

3. Verfahren nach Anspruch 1,
**dadurch gekennzeichnet, dass**
nach Schritt k) die partiell gehärtete Felge (1) oder die partiell gehärtete Felge (1) und die partiell gehärtete Radschüssel (2) in einem Schritt o) angelassen wird.

4. Verfahren nach Anspruch 2oder 3,
**dadurch gekennzeichnet, dass**
nach Schritt m), n) oder o) Schritt c) durchgeführt wird.

5. Verfahren nach Anspruch 1,
**dadurch gekennzeichnet, dass**
nach Schritt k) oder I) Schritt c) durchgeführt wird.

6. Verfahren nach Anspruch 5,
**dadurch gekennzeichnet, dass**
das Fahrzeugrad (3) in einem Schritt p) partiell angelassen wird oder in einem Schritt q) vollständig angelassen wird.

7. Verfahren nach einem der Ansprüche 2, 3, 4 5 oder 6,
**dadurch gekennzeichnet, dass**
das Anlassen bei einer Temperatur von mindestens 200°C, insbesondere von mindestens 300°C, vorzugsweise von mindestens 400°C und unterhalb der A_{c1}-Temperatur, vorzugsweise unter 650°C durchgeführt wird.

8. Verfahren nach Anspruch 7,
**dadurch gekennzeichnet, dass**
zwischen Beginn des Anlassvorgangs und Wiedererreichen der Raumtemperatur oder dem Anlassvorgang nachgelagert ein Kalibrieren, insbesondere zur Gewährleistung der Maßhaltigkeit durchgeführt werden.

9. Verfahren nach Anspruch 1,
**dadurch gekennzeichnet, dass**
das Härten nur in der Randschicht des härtbaren Stahlwerkstoffs durchgeführt wird.

10. Verfahren nach einem der vorgenannten Ansprüche,
**dadurch gekennzeichnet, dass**
der Vergütungsstahl der Güte C22, C35, C45, C55, C60, 42CrMo4 oder der manganhaltige Stahl der Güte 16MnB5, 16MnCr5, 20MnB5, 22MnB5, 30MnB5, 37MnB4, 37MnB5, 40MnB4 entspricht.

## Claims

1. Method for producing a vehicle wheel (3) in sheet metal construction, having a rim (1) for receiving a tire and a wheel disc (2) which is connected to the rim in a material-, force- and/or form-locking manner and has a connection region for releasable connection to a wheel carrier, comprising the following steps:
a) Cold forming or cold preforming of a rim (1),
b) Cold forming or cold preforming of a wheel disc (2), and
c) Connecting the wheel disc (2) to the rim (1) to form a vehicle wheel (3),
wherein a hardenable steel material with a carbon content of at least 0.15% by weight, in particular of at least 0.22% by weight, preferably of at least 0.27% by weight, is provided for the rim (1) or the rim (1) and wheel disc (2),
**characterized in that**
before step c), the cold-formed or cold-preformed rim (1) or the cold-formed or cold-preformed rim (1) and the cold-formed or cold-preformed wheel disc (2) are first completely heated to a temperature above the A_{c1} temperature in a step j), preferably above the A_{c3} temperature, and then the warm rim (1) or the warm rim (1) and the warm wheel disc (2) is partially hardened in a step k) or is completely hardened in a step l) and the vehicle wheel (3) is used in commercial vehicles, trucks, special-purpose vehicles, buses, coaches, whether with internal combustion engine and/or electric drive, trailers or semi-trailers, wherein the steel material provided is a case-hardening steel, a manganese-containing steel or a heat-treatable steel.

2. Method according to claim 1,
**characterized in that**
after step l), the fully hardened rim (1) or the fully hardened rim (1) and the fully hardened wheel disc (2) are partially tempered in step m) or fully tempered in step n).

3. Method according to claim 1,
**characterized in that**
after step k), the partially hardened rim (1) or the partially hardened rim (1) and the partially hardened wheel disc (2) are tempered in step o).

4. Method according to claim 2 or 3,
**characterized in that**
is carried out after step m), n) or o) step c).

5. Method according to claim 1,
**characterized in that**
is carried out after step k) or l) step c).

6. Method according to claim 5,
**characterized in that**
the vehicle wheel (3) is partially tempered in step p) or fully tempered in step q).

7. The method according to any one of claims 2, 3, 4, 5 or 6,
**characterized in that**
the tempering is carried out at a temperature of at least 200°C, in particular at least 300°C, preferably at least 400°C and below the A_{c1} temperature, preferably below 650°C.

8. Method according to claim 7,
**characterized in that**
calibration can be carried out between the start of the tempering process and the return to room temperature or after the tempering process, in particular to ensure dimensional accuracy.

9. Method according to claim 1,
**characterized in that**
hardening is only carried out in the surface layer of the hardenable steel material.

10. A method according to any one of the preceding claims,
**characterized in that**
the heat-treatable steel corresponds to grade C22, C35, C45, C55, C60, 42CrMo4 or the manganese-containing steel corresponds to grade 16MnB5, 16MnCr5, 20MnB5, 22MnB5, 30MnB5, 37MnB4, 37MnB5, 40MnB4.

## Revendications

1. Procédé de fabrication d'une roue de véhicule (3) en tôle, avec une jante (1) pour recevoir un pneu et un disque de roue (2) relié à la jante par liaison de matière, de force et/ou de forme, avec une zone de liaison pour la liaison amovible à un support de roue, comprenant les étapes suivantes :
a) Formage à froid ou préformage à froid d'une jante (1),
b) Formage à froid ou le préformage à froid d'un disque de roue (2), et
c) Relier le disque de roue (2) à la jante (1) pour former une roue de véhicule (3),
un matériau d'acier durcissable ayant une teneur en carbone d'au moins 0,15 % en poids, en particulier d'au moins 0,22 % en poids, de préférence d'au moins 0,27 % en poids, étant mis à disposition pour la jante (1) ou pour la jante (1) et le disque de roue (2),
**caractérisé en ce que**
avant l'étape c), la jante (1) formée à froid ou préformée à froid ou la jante (1) formée à froid ou préformée à froid et le disque de roue (2) formé à froid ou préformé à froid sont d'abord complètement amenés à une température supérieure à la température A_{c1} dans une étape j), de préférence au-dessus de la température A_{c3} et ensuite la jante chaude (1) ou la jante chaude (1) et le disque de roue chaud (2) est partiellement durci dans une étape k) ou complètement durci dans une étape l) et la roue de véhicule (3) est utilisée dans des véhicules utilitaires, camions, véhicules spéciaux, autobus, autocars, qu'ils soient équipés d'un moteur à combustion interne et/ou d'une propulsion électrique, remorques ou semi-remorques, le matériau d'acier fourni étant un acier de cémentation, un acier contenant du manganèse ou un acier de traitement.

2. Procédé selon la revendication 1,
**caractérisé en ce que**
après l'étape l), la jante entièrement durcie (1) ou la jante entièrement durcie (1) et le disque de roue entièrement durci (2) sont soumis à un revenu partiel dans une étape m) ou à un revenu total dans une étape n).

3. Procédé selon la revendication 1,
**caractérisé en ce que**
après l'étape k), la jante partiellement durcie (1) ou la jante partiellement durcie (1) et le disque de roue partiellement durci (2) sont soumis à un revenu dans une étape o).

4. Procédé selon la revendication 2 ou 3,
**caractérisé en ce que**
est effectuée après l'étape m), n) ou o) l'étape c).

5. Procédé selon la revendication 1,
**caractérisé en ce que**
est effectuée après l'étape k) ou l) l'étape c).

6. Procédé selon la revendication 5,
**caractérisé en ce que**
la roue de véhicule (3) est partiellement recuirée dans une étape p) ou est complètement recuirée dans une étape q).

7. Procédé selon l'une des revendications 2, 3, 4, 5 ou 6,
**caractérisé en ce que**
le recuire est effectué à une température d'au moins 200°C, en particulier d'au moins 300°C, de préférence d'au moins 400°C et inférieure à la température A_{c1}), de préférence inférieure à 650°C.

8. Procédé selon la revendication 7,
**caractérisé en ce que**
entre le début du processus de recuire et le retour à la température ambiante ou après le processus de recuire, un calibrage peut être effectué, notamment pour garantir le respect des dimensions.

9. Procédé selon la revendication 1,
**caractérisé en ce que**
la trempe n'est effectuée que dans la couche périphérique du matériau d'acier trempable.

10. Procédé selon l'une quelconque des revendications précédentes,
**caractérisé en ce que**
l'acier de traitement correspond à la qualité C22, C35, C45, C55, C60, 42CrMo4 ou l'acier contenant du manganèse correspond à la qualité 16MnB5, 16MnCr5, 20MnB5, 22MnB5, 30MnB5, 37MnB4, 37MnB5, 40MnB4.
